(19) Europäisches Patentamt
European Patent Office
Office européen des brevets

(11) **EP 2 324 323 B1**

(12) **EUROPÄISCHE PATENTSCHRIFT**

(45) Veröffentlichungstag und Bekanntmachung des Hinweises auf die Patenterteilung:
**18.01.2012 Patentblatt 2012/03**

(51) Int Cl.:
***G01B 21/16*** *(2006.01)*     ***B60T 8/17*** *(2006.01)*

(21) Anmeldenummer: **09776647.1**

(22) Anmeldetag: **26.05.2009**

(86) Internationale Anmeldenummer:
**PCT/EP2009/003698**

(87) Internationale Veröffentlichungsnummer:
**WO 2010/022806 (04.03.2010 Gazette 2010/09)**

(54) **VERFAHREN ZUR BESTIMMUNG EINES RADSTANDES EINES FAHRZEUGES UND FAHRZEUGREGELUNGSSYSTEM ZUR BENUTZUNG EINER DERARTIGEN VERFAHRENS**

METHOD FOR DETERMINING A WHEELBASE OF A VEHICLE AND VEHICLE CONTROL SYSTEM FOR USING SUCH A METHOD

PROCÉDÉ POUR LA DÉTERMINATION D'UN EMPATTEMENT D'UN VÉHICULE ET SYSTÈME DE RÉGLAGE DE VÉHICULE POUR L'UTILISATION D'UN PROCÉDÉ DE CE TYPE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **29.08.2008   DE 102008044960**

(43) Veröffentlichungstag der Anmeldung:
**25.05.2011   Patentblatt 2011/21**

(73) Patentinhaber: **WABCO GmbH**
**30453 Hannover (DE)**

(72) Erfinder:
• **PLÄHN, Klaus**
**30926 Seelze (DE)**
• **VONBEHREN, Ulrich**
**31515 Wunstorf (DE)**
• **WOHLTMANN, Dirk**
**30890 Barsinghausen (DE)**
• **WOLF, Thomas**
**30890 Barsinghausen (DE)**

(74) Vertreter: **Lauerwald, Jörg**
**Wabco GmbH**
**Am Lindener Hafen 21**
**30453 Hannover**
**Postfach 91 12 62**
**30432 Hannover (DE)**

(56) Entgegenhaltungen:
**DE-A1- 19 706 752     DE-C1- 19 809 546**

## Beschreibung

Die Erfindung betrifft ein Verfahren zur Bestimmung eines Radstandes eines Fahrzeugs und ein Fahrzeugregelungssystem, insbesondere Fahrdynamikregelungssystem, zur Benutzung eines derartigen Verfahrens.

Bei einem Fahrzeug mit zwei Achsen, d.h. einer Lenkachse bzw. Vorderachse und einer Antriebsachse bzw. Hinterachse, wird als Radstand der Abstand der Mitte der Lenkachse zur Mitte der Antriebsachse definiert. Bei einem Fahrzeug mit drei Achsen kann das Verfahren ebenfalls angewendet werden. Bei einer nicht gelenkten Zusatzachse wird dabei näherungsweise als Radstand der Abstand von Abstand der Mitte der Lenkachse bzw. Vorderachse zur Mitte zwischen den beiden Hinterachsen angenommen. Bei gelenkter Zusatzachse hat diese keinen Einfluß, sofern die Achse freilaufend ist oder bei zwangsgelenkter Achse die Zusatzachse auf dem Kurvenradius läuft.

Für verschiedene Funktionen oder Regelsysteme, insbesondere Stabilitätsregelsysteme des Fahrzeugs, ist der Radstand eine wesentliche Eingangsgröße, um das Fahrdynamikverhalten des Fahrzeuges abschätzen und bewerten zu können. Fahrzeuge mit größeren Radständen verhalten sich unter anderem während Bremsungen bezüglich der Fahrdynamik und der Lenkeigenschaften stabiler als Fahrzeuge mit kleinerem Radstand. So ist z. B. an der Lenkachse ein Kompromiss zwischen maximal erreichbarer Abbremsung und dem Erhalt der Lenkbarkeit zu ermitteln. Die Lenkbarkeit wird hierbei wesentlich durch stabilisierende Seitenführungskräfte beeinflusst, wobei die resultierenden Momente proportional zum Radstand steigen.

Die Bestimmung des Radstandes erfolgt im Allgemeinen aus Datenblättern zu dem jeweiligen Fahrzeug bzw. Herstellerangaben. Hierbei können allerdings Variationen bei unterschiedlichen Ausstattungen und fertigungsbedingte Toleranzen auftreten.

Die DE19809546C1 zeigt ein Verfahren zur Ermittlung des Radstandes von lenkbaren Fahrzeugen während einer Kurvenfahrt allein aus geometrischen Daten. Der Radstand wird aus mindestens einer vorgegebenen Spurweite, gemessenen Radumfangsgeschwindigkeiten und/oder gemessenen Lenkwinkeln ermittelt.

Die DE19706752A1 beschreibt ein Verfahren zum Abschätzen der Bezugsradgeschwindigkeit eines Fahrzeugs für eine Kurvenstabilitätssteuerung, wobei die Sollschlupfverhältnisse jedes der vier Räder eines Vierradantriebs berechnet werden.

Bei derzeit verwendeten Regelsystemen, insbesondere Stabilitätsregelsystemen, bei denen der Radstand als Eingangsgröße verwendet wird, werden zum Teil lediglich Fahrzeuggruppen mit kleinem, mittlerem oder großem Radstand bestimmt und das Regelverhalten somit grob angepasst, um das fahrdynamische Verhalten des Fahrzeuges zu bestimmen und zu beschreiben; somit sind derartige Bestimmungsverfahren und die hierauf beruhenden Regelsysteme ungenau.

Der Erfindung liegt die Aufgabe zugrunde, eine genaue Bestimmung des Radstandes des Fahrzeugs zu ermöglichen.

Diese Aufgabe wird durch ein Verfahren nach Anspruch 1 und ein Fahrzeugregelungssystem nach Anspruch 15 gelöst. Die Unteransprüche beschreiben bevorzugte Weiterbildungen.

Der Erfindung liegt der Gedanke zugrunde, den Radstand während der Fahrt des Fahrzeugs dynamisch aus Messsignalen, insbesondere Fahrdynamik-Messsignalen des Fahrzeugs, zu ermitteln.

Vorteilhafterweise werden hierzu die Radgeschwindigkeiten von mindestens zwei Rädern, insbesondere Rädern der Vorderachse sowie einer Hinterachse, sowie eine gemessene oder ermittelte Gierrate des Fahrzeugs während einer Kurvenfahrt herangezogen.

Dem liegt die Überlegung zugrunde, dass bei einer Kurvenfahrt eine gemeinsame Gierrate der Räder des Fahrzeugs bei unterschiedlichen Kur-venradien der einzelnen Räder vorliegt und aus diesen Werten der Radstand abgeleitet werden kann.

Zur Ermittlung der einzelnen Radgeschwindigkeiten können erfindungsgemäß insbesondere die für verschiedene Stabilitätsregelungen ohnehin gemessenen Raddrehzahlen der Räder als Messsignale herangezogen werden, wobei die einzelnen Radgeschwindigkeiten aus den Raddrehzahlen durch einen Abgleich während einer Gradeausfahrt ermittelt werden können. Aus den Radgeschwindigkeiten und der gemeinsamen Gierrate ergeben sich nachfolgend die Kurvenradien der einzelnen Räder, aus denen wiederum der Radstand geometrisch abgeleitet werden kann.

Hierbei treten große Differenzen in den Radgeschwindigkeiten zwischen dem kurvenäußeren Rad der Lenkachse und dem kurveninneren Rad der Hinterachse auf, so dass insbesondere diese beiden Räder zur Ermittlung des Radstandes herangezogen werden können. Weiterhin können auch Räder einer einzigen Seite, d.h. der kurveninneren oder der kurvenäußeren Seite herangezogen werden.

Erfindungsgemäß kann unter Heranziehung des mit diesem Verfahren bestimmten Radstandes eine radstandsabhängige Brernskraftverteilung z.B. achsweise vorgenommen werden. Darüber hinaus ist eine Anpassung des Bremskraftniveaus proportional zum Radstand des Fahrzeugs möglich. Dadurch kann eine Verbesserung der Abbremsung erzielt werden.

Neben der Verwendung für Bremssysteme bzw. Brems-Regelsysteme kann der Radstand erfindungsgemäß auch bei der Bestimmung der Lenkübersetzung, der Einzelradreferenzen von Regelsystemen oder des Soll-Gierverhaltens herangezogen werden.

Erfindungsgemäß kann die Gierrate über einen Gierratensensor gemessen werden; weiterhin ist auch eine Bestimmung aus anderen Messgrößen möglich, z. B. aus der Differenzgeschwindigkeit der Vorderräder; weiterhin kann die Gierrate grundsätzlich auch indirekt ermittelt bzw. abgeschätzt werden.

Somit kann erfindungsgemäß der Radstand aus Messsignalen ermittelt werden, die ohnehin im Fahrzeug oder den meisten Fahrzeugen, insbesondere Nutzfahrzeugen, vorliegen. Es kann somit insbesondere auch kein weiterer Hardwareaufwand zur Durchführung des erfindungsgemäßen Verfahrens erforderlich sein, so dass es über eine zusätzliche Programmierung eingestellt werden kann.

Die Erfindung wird im Folgenden anhand der beiliegenden Zeichnungen an einer Ausführungsform erläutert. Es zeigen:

Fig. 1     ein erfindungsgemäßes Fahrzeug in einer Linkskurve;
Fig. 2     das Fahrzeug in einer Rechtskurve.
Fig. 3     eine Draufsicht auf das Fahrzeug.

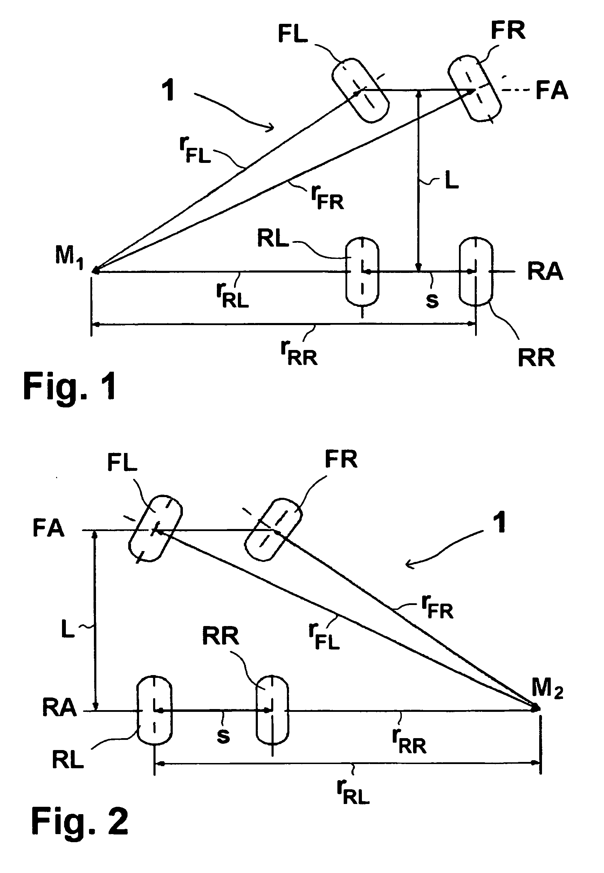

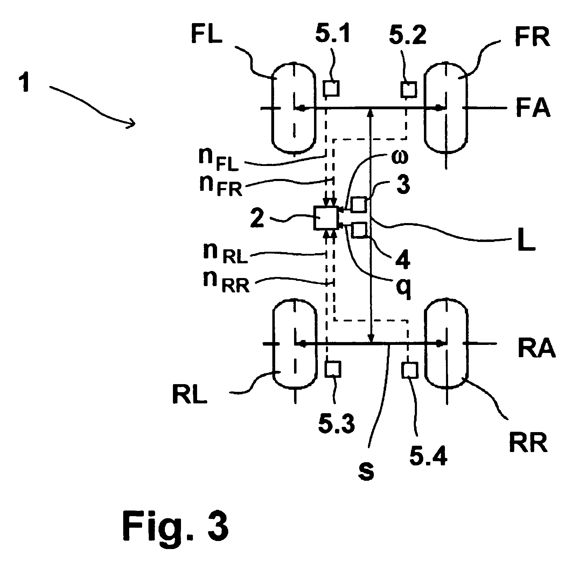

Ein Fahrzeug 1 ist in Fig. 3 detaillierter und in Fig. 1 und 2 in Draufsicht mit seinen Rädern gezeigt; es weist eine gelenkte Vorderachse FA mit einem linken Vorderrad FL und einem rechten Vorderrad FR, sowie eine Hinterachse RA mit einem linken Hinterrad RL und einem rechten Hinterrad RR auf; die gelenkte Vorderachse FA stellt somit die Lenkachse dar, die Hinterachse RA die Antriebsachse.

Weiterhin weist das Fahrzeug 1 eine Steuereinrichtung 2 eines Fahrzeug-Regelsystems, insbesondere eines Fahrdynamikregelsystems, einen Gierratensensor 3 zur Messung der Gierrate $\omega$, vorteilhafterweise auch einen Querbeschleunigungssensor 4 zur Messung der Querbeschleunigung q sowie an seinen Rädern jeweils einen Raddrehzahlsensor 5.1, 5.2, 5.3, 5.4 auf, der die jeweilge Raddrehzahl $n_{FL}$, $n_{FR}$, $r_{RL}$, $r_{RR}$ misst, die in an sich bekannter Weise für Fahrdynamiksregelsysteme, insbesondere Schlupfregelsysteme, z.B. ABS, ASR, ESP oder ESC verwendet werden.

Bei diesem zweiachsigen Fahrzeug 1 ist der Radstand L wie eingezeichnet als Abstand der beiden Achse FA, RA in ihrem mittleren Bereich festgelegt.

Fig. 1 zeigt eine Linkskurve mit entsprechend eingeschlagenen Vorderrädern FL, FR. Hierbei sind die Kurvenradien der vier Räder zu dem gemeinsamen Kurvenmittelpunkt M1 eingezeichnet, wobei das linke Vorderrad FL den Kurvenradius $r_{FL}$, das kurvenäußere, rechte Vorderrad FR den Kurvenradius $r_{FR}$, das linke, kurveninnere Hinterrad RL den Kurvenradius $r_{RL}$ und das kurvenäußere, rechte Hinterrad RR den Kurvenradius $r_{RR}$ aufweist. Bei einer Spurbreite s zwischen den Hinterräder RL und RR gilt in dieser Linkskurve entsprechend $r_{RR}=r_{RL}+S$.

In der Rechtskurve der Fig. 2 sind wiederum die Kurvenradien $r_{FL}$, $r_{FR}$, $r_{RL}$ und $r_{RR}$ um den Kurvenmittelpunkt M2 eingezeichnet, wobei in der Rechtskurve jedoch $r_{RL} = r_{RR} +s$ gilt.

Für das Fahrzeug 1 und somit seine vier Räder FL, FR, RL, RR liegt eine gemeinsame Gierrate $\omega$ um den jeweiligen Kurvenmittelpunkt M1 oder M2 vor.

Die einzelnen Räder FL, FR, RL, RR weisen jeweils spezifische Radgeschwindigkeiten $v_{FL}$, $v_{FR}$, $v_{RL}$ und $v_{RR}$ auf, die bei einer Geradeausfahrt der Fahrzeug-Geschwindigkeit $v_1$ entsprechen, d.h. bei der Gierrate $\omega = 0$ gilt $V_{FL}= V_{FR}= V_{RL} = v_{RR}= v_1$. Bei einer Kurvenfahrt, d.h. $\omega \neq 0$ gilt für jede Radgeschwindigkeit $v_x$ mit x aus (FL, FR, RL, RR) bei hinreichend niedrigem Schräglaufwinkel die Gleichung

$$v_x = \omega * r_x$$

Der Schräglaufwinkel kann durch Heranziehung des ermittelten Wertes aus einem Fahrzeug-Regelsystem, insbesondere Stabilitätsregelsystem abgeschätzt werden. Hierbei kann insbesondere auch zusätzlich die Querbeschleunigung q des Fahrzeugs gemessen und die erfindungsgemäße Berechnung auf Zustände mit hinreichend kleinem q, d.h. q unterhalb eines Grenzwertes, beschränkt werden, so dass bei stabilem Fahrzustand ohne Schleudern etc. auch ein geringer Schräglaufwinkel vorliegt.

Der Radstand L ist in den Figuren 1 und 2 grundsätzlich der gleiche; bei der nachfolgenden Berechnung wird bei der Ermittlung aus der Linkskurve zunächst ein Radstand $L_L$, bei der Ermittlung aus der Rechtskurve ein Radstand $L_R$ ermittelt.

Es gilt in der Linkskurve der Fig. 1 aufgrund der Ausbildung der rechtwinkligen Dreiecke zwischen einerseits dem Radstand L und andererseits den hinteren Kurvenradien $r_{RL}$ und $r_{RR}$ sowie der hieraus folgenden geometrischen Summenbildung das Gleichungssystem:

$$L_L{}^2 = r_{FR}{}^2 - r_{RR}{}^2 = r_{FR}{}^2 - (r_{RL} + s)^2$$

$$L_L = \sqrt{\left(\frac{v_{FR}}{|\omega|}\right)^2 - \left(\frac{v_{RR}}{|\omega|}\right)^2} = \frac{\sqrt{\left(v_{FR}^2 - v_{RR}^2\right)}}{\omega} \qquad \text{seitenweise Radgeschwindigkeiten}$$

$$L_L = \sqrt{\left(\frac{v_{FR}}{|\omega|}\right)^2 - \left(\frac{v_{RL}}{|\omega|} + s\right)^2} \qquad \text{Radgeschwindigkeiten maximaler Differenz}$$

Somit kann der Radstand $L_L$ zum einen gemäß der zweiten Gleichung durch die seitenweisen Radgeschwindigkeiten, insbesondere der kurvenäußeren, rechten Seite vorgenommen werden.

Zum anderen ist die Bestimmung des Radstandes $L_L$ gemäß der dritten Gleichung durch die Radgeschwindigkeiten maximaler Differenz, d.h. des kurvenäußeren Vorderrades FR und des kurveninneren Hinterrades RL möglich. Aufgrund der größeren Geschwindigkeitsdifferenz wirken sich Meßfehler bei den Radgeschwindigkeiten nicht so sehr aus.

Grundsätzlich können auch beide Gleichungen oder weitere Gleichungen zwischen zwei Rädern aufgestellt werden.

Entsprechend gilt bei der Rechtskurve der Fig. 2 folgendes Gleichungssystem:

$$L_R{}^2 = r_{FL}{}^2 - r_{RL}{}^2 = r_{FL}{}^2 - (r_{RR} + s)^2$$

$$L_R = \sqrt{\left(\frac{v_{FL}}{|\omega|}\right)^2 - \left(\frac{v_{RL}}{|\omega|}\right)^2} = \frac{\sqrt{\left(v_{FL}^2 - v_{RL}^2\right)}}{\omega} \qquad \text{seitenweise Radgeschwindigkeiten}$$

$$L_R = \sqrt{\left(\frac{v_{FL}}{|\omega|}\right)^2 - \left(\frac{v_{RR}}{|\omega|} + s\right)^2} \qquad \text{Radgeschwindigkeiten maximaler Differenz}$$

Auch bei der Ermittlung des Radstandes aus der Rechtskurve kann somit entsprechend der obigen Berechnung bei der Linkskurve wieder eine seitenweise Ermittlung oder auch eine Ermittlung mit Radgeschwindigkeiten maximaler Differenz vorgenommen werden.

Zur Bestimmung der Radgeschwindigkeiten $v_{FL}$, $v_{FR}$, $v_{RL}$ und $v_{RR}$ werden erfindungsgemäß vorteilhafterweise die Raddrehzahlen $n_{FL}$, $n_{FR}$, $n_{RL}$ und $n_{RR}$ der Räder verwendet. Erfindungsgemäß wird hierbei erkannt, dass diese Raddrehzahlen aufgrund der unterschiedlichen Reifenradien $ra_{FL}$, $ra_{FR}$, $ra_{RL}$ und $ra_{RR}$ nicht direkt vergleichbar sind. Die jeweilige Radgeschwindigkeit $v_{FL}$, $v_{FR}$, $v_{RL}$ und $v_{RR}$ ergibt sich als Produkt der jeweiligen Raddrehzahl mit dem Radumfang, d.h.

$v_x = 2\pi\, n_x\, ra_x$ für x= FL, FR, RL, RR.

Hierbei können die Radgeschwindigkeiten $v_{FL}$, $v_{FR}$, $v_{RL}$ und $v_{RR}$ bei Erkennen einer Geradeausfahrt abgeglichen werden, da bei einer Geradeausfahrt gleiche Radgeschwindigkeiten vorliegen und somit Unterschiede der gemessenen Raddrehzahlen auf entsprechende Unterschiede der Radradien zurückgeführt werden können, und somit die Radradien bzw. entsprechende Kompensationsfaktoren oder Korrekturfaktoren ermittelt und für nachfolgende Berechnungen der Kurvenfahrten einbezogen werden können. Zur Ermittlung einer Geradeausfahrt kann der Gierratensensor 3 herangezogen werden; eine Geradeausfahrt liegt somit vor, wenn die gemessene Gierrate $\omega$ unterhalb eines geringen Schwellwertes und somit nahe bei Null ist.

Bei der erfindungsgemäßen Ermittlung des Radstandes liegt vorteilhafterweise ein stabiler Fahrzustand ohne Schleudern oder Schlupf, d.h. auch ohne Bremsbetätigung vor. Weiterhin ist keine Fahrzeugregelung wie z.B. ABS, ASR, ESC, RSC usw. aktiv. Somit wird bei einer Bremsbetätigung oder dem Einsatz einer derartigen Regelung gegebenenfalls die Messung abgebrochen. Wie oben ausgeführt kann ergänzend auch der Schräglaufwinkel begrenzt werden, indem nur Messungen bei hinreichend kleiner Querbeschleunigung verwendet werden.

Wenn anstelle eines zweiachsigen Fahrzeuges ein Fahrzeug mit drei Achsen, d.h. einer vorderen Lenkachse und zwei nicht gelenkten Hinterachsen verwendet wird, wird entsprechend als Radstand der Abstand der Mitte der Lenkachse zur Mitte der beiden Hinterachsen, d.h. dem in Längsrichtung mittleren Wert, herangezogen.

Erfindungsgemäß kann der Radstand L als Mittelwert aus den Werten des Radstandes $L_L$ und $L_R$ bei Links- und Rechtskurven gebildet werden. Weiterhin kann die Ermittlung des Radstandes sukzessiv durch Aufnahme immer weiterer Messungen verbessert werden.

## Patentansprüche

1. Verfahren zur Bestimmung eines Radstandes (L) eines Fahrzeuges (1) mit mindestens zwei Achsen (FA, RA), bei dem während zumindest einer Kurvenfahrt des Fahrzeuges (1) Messsignale ($\omega$; $n_{FL}$, $n_{FR}$, $n_{RL}$, $n_{RR}$ ,q) des Fahrzeuges (1) aufgenommen werden, und aus zumindest den Messsignalen ($\omega$; $n_{FL}$, $n_{FR}$, $n_{RL}$, $n_{RR}$) der Radstand (L) ermittelt wird, **dadurch gekennzeichnet, dass** der Radstand (L, $L_L$, $L_R$) bei einer Kurvenfahrt als Wurzel einer Differenz von Quadraten der Kurvenradien ($r_{FL}$, $r_{FR}$, $r_{RL}$, $r_{RR}$) oder als geometrische Differenz der Kurvenradien ($r_{FL}$, $r_{FR}$, $r_{RL}$, $r_{RR}$) eines Rades der ersten Achse (FA) und eines Rades der zweiten Achse (RA) ermittelt wird , wobei für die Kurvenradien ($r_{FL}$, $r_{FR}$, $r_{RL}$, $r_{RR}$) der Räder ein Quotient aus der jeweiligen Radgeschwindigkeit ($v_{FL}$, $v_{FR}$, $v_{RL}$, $v_{RR}$) des Rades und einer Gierrate ($\omega$) des Fahrzeugs (1) eingesetzt wird.

2. Verfahren nach Anspruch 1, **dadurch gekennzeichnet, dass** die Messsignale Fahrdynamik-Messsignale ($\omega$; $n_{FL}$, $n_{FR}$, $n_{RL}$, $n_{RR}$ ,q) des Fahrzeuges (1) sind.

3. Verfahren nach Anspruch 1 oder 2, **dadurch gekennzeichnet, dass** als Messsignale eine Raddrehzahl ($n_{FL}$, $n_{FR}$, $n_{RL}$, $n_{RR}$) oder Radgeschwindigkeit ($v_{FL}$, $v_{FR}$, $v_{RL}$ und $v_{RR}$) eines Rades der ersten Achse (FA) und eines Rades der zweiten Achse (RA) gemessen wird.

4. Verfahren nach Anspruch 3, **dadurch gekennzeichnet, dass** die Raddrehzahlen ($n_{FL}$, $n_{FR}$, $n_{RL}$, $n_{RR}$) des Fahrzeugs (1) gemessen und während einer Geradeausfahrt des Fahrzeuges (1) aus einem Vergleich der Raddrehzahlen ($n_{FL}$, $n_{FR}$, $n_{RL}$, $n_{RR}$) Umrechnungsfaktoren ($r_{FL}$, $r_{FR}$, $r_{RL}$, $r_{RR}$) zur Ermittlung der Radgeschwindigkeiten ($v_{FL}$, $v_{FR}$, $v_{RL}$, $v_{RR}$) aus den Raddrehzahlen ermittelt werden.

5. Verfahren nach einem der vorherigen Ansprüche, **dadurch gekennzeichnet, dass** als Messsignal eine Gierrate ($\omega$) des Fahrzeuges (1) während der Kurvenfahrt gemessen oder abgeschätzt wird.

6. Verfahren nach Anspruch 5, **dadurch gekennzeichnet, dass** die Geradeausfahrt aus dem Gierratensignal ($\omega$) und/oder aus einem Lenkradwinkelsignal und/oder einem Querbeschleunigungssignal ermittelt wird.

7. Verfahren nach Anspruch 1, **dadurch gekennzeichnet, dass** ein kurveninneres, hinteres Rad (RL; RR) und ein kurvenäußeres, vorderes Rad (FR; FL) zur Berechnung herangezogen werden, wobei in die Berechnung ergänzend eine Spurbreite (s), insbesondere der zweiten Achse (RA), aufgenommen wird.

8. Verfahren nach Anspruch 1, **dadurch gekennzeichnet, dass** das vordere und hintere Rad (FL, RL; FR, RR) der Räder einer Seite, z.B. der kurvenäußeren Seite, herangezogen werden.

9. Verfahren nach einem der vorherigen Ansprüche, **dadurch gekennzeichnet, dass** Ermittlungen des Radstandes während mindestens einer Linkskurve und mindestens einer Rechtskurve durchgeführt und nachfolgend ein gemittelter Wert des Radstandes (L) ermittelt wird.

10. Verfahren nach einem der vorherigen Ansprüche, **dadurch gekennzeichnet, dass** die erste Achse eine Vorderachse (FA), vorzugsweise Lenkachse, des Fahrzeugs (1) und die zweite Achse (RA) eine Hinterachse (RA), vorzugsweise Antriebsachse, des Fahrzeugs (1) ist,
wobei der Radstand als Abstand in einem mittleren Bereich der Achsen (FA, RA) ermittelt wird.

11. Verfahren nach einem der Ansprüche 1 bis 9, **dadurch gekennzeichnet, dass** das Fahrzeug (1) zwei Hinterachsen aufweist und der Radstand als Abstand der Vorderachse zu einer Mitte zwischen den beiden Hinterachsen ermittelt wird.

**12.** Verfahren nach einem der vorherigen Ansprüche, **dadurch gekennzeichnet, dass** die Messsignale ($\omega$; $n_{FL}$, $n_{FR}$, $n_{RL}$, $n_{RR}$ ,q) des Fahrzeuges (1) zur Bestimmung des Radstandes nur aufgenommen werden bei Nichtvorliegen einer Fahrzeugregelung.

**13.** Verfahren nach einem der vorherigen Ansprüche, **dadurch gekennzeichnet, dass** die Messsignale ($\omega$; $n_{FL}$, $n_{FR}$, $n_{RL}$, $n_{RR}$ q) des Fahrzeuges (1) zur Bestimmung des Radstandes nur aufgenommen werden bei einem stabilen Fahrzustand ohne Radschlupf und ohne Schleudern des Fahrzeugs (1).

**14.** Verfahren nach einem der vorherigen Ansprüche, **dadurch gekennzeichnet, dass** eine Querbeschleunigung (q) des Fahrzeugs gemessen wird und die Messsignale ($\omega$; $n_{FL}$, $n_{FR}$, $n_{RL}$, $n_{RR}$) des Fahrzeuges (1) zur Bestimmung des Radstandes nur aufgenommen werden, wenn zur Begrenzung des Schräglaufwinkels eine gemessene Querbeschleunigung (q) einen Schwellwert nicht übersteigt.

**15.** Fahrzeugregelungssystem für ein Fahrzeug (1), das geeignet ist, Messsignale ($\omega$; $n_{FL}$, $n_{FR}$, $n_{RL}$, $n_{RR}$ q) aufzunehmen, eine Fahrzeugregelung durchzuführen und dabei einen Radstand (L) des Fahrzeuges (1) durch ein Verfahren nach einem der vorherigen Ansprüche zu bestimmen und heranzuziehen.

**16.** Fahrzeugregelungssystem nach Anspruch 15, **dadurch gekennzeichnet, dass** es eine Steuereinrichtung (2), einen Gierratensensor 3 zur Messung der Gierrate ($\omega$), Raddrehzahlsensoren (5.1, 5.2, 5.3, 5.4) zur Messung der Raddrehzahlen ($n_{FL}$, $n_{FR}$, $n_{RL}$, $n_{RR}$) und einen Querbeschleunigungssensor (4) zur Messung der Querbeschleunigung (q) aufweist.

**17.** Fahrzeugregelungssystem nach Anspruch 15 oder 16, **dadurch gekennzeichnet, dass** es ein Stabilitätsregelungssystem oder Bremsregelungssystem, z. B. ABS, ASR, ESP oder ESC, ist.

**18.** Fahrzeugregelungssystem nach einem der Ansprüche 15 bis 17, **dadurch gekennzeichnet, dass** der ermittelte Radstand (L) zur Bestimmung der Lenkübersetzung, der Einzelradreferenzen von Regelsystemen oder des Gierverhaltens herangezogen wird.

**Claims**

**1.** Method for determining a wheelbase (L) of a vehicle (1) having at least two axles (FA, RA), in which, during at least one cornering process of the vehicle (1), measurement signals ($\omega$; $n_{FL}$, $n_{FR}$, $n_{RL}$, $n_{RR}$, q), of the vehicle (1) are recorded, and the wheelbase (L) is determined from at least the measurement signals ($\omega$; $n_{FL}$, $n_{FR}$, $n_{RL}$, $n_{RR}$), **characterized in that** the wheelbase (L, $L_L$, $L_R$) is determined during a cornering process as a route of a difference between squares of the bend radii ($r_{FL}$, $r_{FR}$, $r_{RL}$, $r_{RR}$) or as a geometric difference between the bend radii ($r_{FL}$, $r_{FR}$, $r_{RL}$, $r_{RR}$) of one wheel of the first axle (FA) and one wheel of the second axle (RA), wherein a quotient formed from the respective wheel speed ($v_{FL}$, $v_{FR}$, $v_{RL}$, $v_{RR}$) of the wheel and yaw rate ($\omega$) of the vehicle (1) is used for the bend radii ($r_{FL}$, $r_{FR}$, $r_{RL}$, $r_{RR}$) of the wheels.

**2.** Method according to Claim 1, **characterized in that** the measurement signals are vehicle movement dynamics measurement signals ($\omega$; $n_{FL}$, $n_{FR}$, $n_{RL}$, $n_{RR}$, q) of the vehicle (1).

**3.** Method according to Claim 1 or 2, **characterized in that** a wheel rotational speed ($n_{FL}$, $n_{FR}$, $n_{RL}$, $n_{RR}$) or wheel speed ($v_{FL}$, $v_{FR}$, $v_{RL}$, and $v_{RR}$) of a wheel of the first axle (FA) and of a wheel of the second axle (RA) is measured.

**4.** Method according to Claim 3, **characterized in that** the wheel rotational speeds ($n_{FL}$, $n_{FR}$, $n_{RL}$, $n_{RR}$) of the vehicle (1) are measured, and, during straight-ahead travel of the vehicle (1), conversion factors ($r_{FL}$, $r_{FR}$, $r_{RL}$, $r_{RR}$) for determining the wheel speeds ($v_{FL}$, $v_{FR}$, $v_{RL}$, $v_{RR}$) from the wheel rotational speeds are determined from a comparison of the wheel rotational speeds ($n_{FL}$, $n_{FR}$, $n_{RL}$, $n_{RR}$).

**5.** Method according to one of the preceding claims, **characterized in that** a yaw rate ($\omega$) of the vehicle (1) is measured as a measurement signal during travel around a bend or is estimated.

**6.** Method according to Claim 5, **characterized in that** the straight-ahead travel is determined from the yaw rate signal ($\omega$) and/or from a steering wheel angle signal and/or a lateral acceleration signal.

7. Method according to Claim 1, **characterized in that** a rear wheel (RL; RR) on the inside of a bend and a front wheel (FR; FL) on the outside of a bend are used for the calculation, wherein a track width (s), in particular of the second axle (RA), is additionally included in the calculation.

8. Method according to Claim 1, **characterized in that** the front and rear wheels (FL, RL; FR, RR) of the wheels of one side (for example of the side on the outside of a bend, are used.

9. Method according to one of the preceding claims, **characterized in that** determinations of the wheel base during at least one left-hand bend and at least one right-hand bend are carried out and subsequently an average value of the wheelbase (L) is determined.

10. Method according to one of the preceding claims, **characterized in that** the first axle is a front axle (FA), preferably a steering axle of the vehicle (1), and the second axle (RA) is a rear axle (RA), preferably a drive axle, of the vehicle (1), wherein the wheelbase is determined as a distance in a central region of the axles (FA, RA).

11. Method according to one of Claims 1 to 9, **characterized in that** the vehicle (1) has two rear axles, and the wheelbase is determined as a distance between the front axle and a centre between the two rear axles.

12. Method according to one of the preceding claims, **characterized in that** the measurement signals ($\omega$; $n_{FL}$, $n_{FR}$, $n_{RL}$, $n_{RR}$, q) of the vehicle (1) are included in the determination of the wheelbase only when a vehicle control system is not present.

13. Method according to one of the preceding claims, **characterized in that** the measurement signals ($\omega$; $n_{FL}$, $n_{FR}$, $n_{RL}$, $n_{RR}$, q) of the vehicle (1) is included in the determination of the wheel base only when there is a stable driving state without wheel slip and without skidding of the vehicle (1).

14. Method according to one of the preceding claims, **characterized in that** lateral acceleration (q) of the vehicle is measured and the measurement signals ($\omega$; $n_{FL}$, $n_{FR}$, $n_{RL}$, $n_{RR}$) of the vehicle (1) are included in the determination of the wheelbase only where a measured lateral acceleration (q) does not exceed a threshold value for the purpose of limiting the slip angle.

15. Vehicle control system for a vehicle (1) which is suitable for recording measurement signals ($\omega$; $n_{FL}$, $n_{FR}$, $n_{RL}$, $n_{RR}$, q), for carrying out a vehicle control process and at the same time determining and using a wheel base (L) of the vehicle (1) by means of a method according to one of the preceding claims.

16. Vehicle control system according to Claim 15, **characterized in that** said vehicle control system has a control device (2), a yaw rate sensor (3) for measuring the yaw rate ($\omega$), wheel rotational speed sensors (5.1, 5.2, 5.3, 5.4) for measuring the wheel rotational speeds ($n_{FL}$, $n_{FR}$, $n_{RL}$, $n_{RR}$,) and a lateral acceleration sensor (4) for measuring the lateral acceleration (q).

17. Vehicle control system according to Claim 15 or 16, **characterized in that** said vehicle control system is a stability control system or braking control system, for example ABS, traction control system, ESP or ESC.

18. Vehicle control system according to one of Claims 15 to 17, **characterized in that** the wheelbase (L) which is determined is used to determine the steering transmission ratio, the individual wheel references of control systems or of the yaw behaviour.

**Revendications**

1. Procédé de détermination de l'empattement (L) d'un véhicule (1) qui présente au moins deux essieux (FA, RA), dans lequel pendant que le véhicule (1) parcourt au moins un virage, des signaux de mesure ($\omega$; $n_{FL}$, $n_{FR}$, $n_{RL}$, $n_{RR}$, q) du véhicule (1) sont enregistrés et l'empattement (L) est déterminé au moins à partir des signaux de mesure ($\omega$; $n_{FL}$, $n_{FR}$, $n_{RL}$, $n_{RR}$),
   **caractérisé en ce que**
   l'empattement (L, $L_L$, $L_R$) est déterminé pendant le parcours du virage comme étant la racine carrée de la différence des carrés des rayons ($r_{FL}$, $r_{FR}$, $r_{RL}$, $r_{RR}$) du virage ou comme différence géométrique des rayons ($r_{FL}$, $r_{FR}$, $r_{RL}$, $r_{RR}$) de virage d'une roue du premier essieu (FA) et d'une roue du deuxième essieu (RA), un quotient de la vitesse ($V_{FL}$,

**EP 2 324 323 B1**

$V_{FR}$, $V_{RL}$. $V_{RR}$) de chaque roue et la vitesse de lacet (ω) du véhicule (1) étant utilisés pour les rayons de virage ($r_{FL}$, $r_{FR}$, $r_{RL}$, $r_{RR}$) des roues.

**2.** Procédé selon la revendication 1, **caractérisé en ce que** les signaux de mesure sont des signaux de mesure (ω; $n_{FL}$, $n_{FR}$, $n_{RL}$, $n_{RR}$, q) de la dynamique de roulage du véhicule (1).

**3.** Procédé selon les revendications 1 ou 2, **caractérisé en ce que** comme signaux de mesure, il mesure la vitesse de rotation ($n_{FL}$, $n_{FR}$, $n_{RL}$, $n_{RR}$) ou la vitesse ($V_{FL}$, $V_{FR}$, $V_{RL}$ et $V_{RR}$) d'une roue du premier essieu (FA) et d'une roue du deuxième essieu (RA).

**4.** Procédé selon la revendication 3, **caractérisé en ce que** les vitesses ($n_{FL}$, $n_{FR}$, $n_{RL}$, $n_{RR}$) des roues du véhicule (1) sont mesurées et **en ce que** pendant un parcours en ligne droite du véhicule (1), des facteurs de conversion ($r_{FL}$, $r_{FR}$, $r_{RL}$, $r_{RR}$) destinés à déterminer les vitesses de roues ($V_{FL}$, $V_{FR}$, $V_{RL}$, $V_{RR}$) à partir des vitesses de rotation des roues sont déterminés par comparaison entre les vitesses de rotation ($n_{FL}$, $n_{FR}$, $n_{RL}$, $n_{RR}$) des roues.

**5.** Procédé selon l'une des revendications précédentes, **caractérisé en ce qu'**il mesure ou estime comme signal de mesure la vitesse de lacet (ω) du véhicule (1) pendant qu'il parcourt un virage.

**6.** Procédé selon la revendication 5, **caractérisé en ce que** le parcours en ligne droite est déterminé à partir du signal (ω) de vitesse de lacet, d'un signal d'angle de direction des roues et/ou d'un signal d'accélération transversale.

**7.** Procédé selon la revendication 1, **caractérisé en ce qu'**une roue arrière (RL; RR) intérieure par rapport au virage et une roue avant (FR; FL) extérieure par rapport au virage sont utilisées pour le calcul, la distance (s) entre les roues, en particulier du deuxième essieu (RA), intervenant en complément dans le calcul.

**8.** Procédé selon la revendication 1, **caractérisé en ce qu'**il utilise la roue avant et la roue arrière (FL, RL; FR, RR) d'un côté, par exemple du côté extérieur du virage.

**9.** Procédé selon l'une des revendications précédentes, **caractérisé en ce que** les déterminations de l'empattement sont réalisées pendant au moins un virage vers la gauche et au moins un virage vers la droite, une valeur moyenne de l'empattement (L) étant ensuite déterminée.

**10.** Procédé selon l'une des revendications précédentes, **caractérisé en ce que** le premier essieu est un essieu avant (FA) du véhicule (1), de préférence un essieu directeur, et le deuxième essieu (RA) un essieu arrière (RA) du véhicule (1), de préférence un essieu moteur, l'empattement étant déterminé comme étant la distance entre des parties centrales des essieux (FA, RA).

**11.** Procédé selon l'une des revendications 1 à 9, **caractérisé en ce que** le véhicule (1) présente deux essieux arrières et **en ce que** l'empattement est déterminé comme étant la distance entre l'essieu avant et le milieu de la distance qui sépare les deux essieux arrière.

**12.** Procédé selon l'une des revendications précédentes, **caractérisé en ce que** les signaux de mesure (ω; $n_{FL}$, $n_{FR}$, $n_{RL}$, $n_{RR}$, q) du véhicule (1) ne sont enregistrés pour déterminer l'empattement que lorsqu'une régulation du véhicule n'est pas en service.

**13.** Procédé selon l'une des revendications précédentes, **caractérisé en ce que** les signaux de mesure (ω; $n_{FL}$, $n_{FR}$, $n_{RL}$, $n_{RR}$, q) du véhicule (1) ne sont enregistrés pour déterminer l'empattement que dans une situation de roulage stable sans patinage des roues et sans accélération du véhicule (1).

**14.** Procédé selon l'une des revendications précédentes, **caractérisé en ce qu'**une accélération transversale (q) du véhicule est mesurée et **en ce que** les signaux de mesure (ω; $n_{FL}$, $n_{FR}$, $n_{RL}$, $n_{RR}$) du véhicule (1) ne sont utilisés pour déterminer l'empattement que si une accélération transversale (q) mesurée ne dépasse pas une valeur de seuil, en vue de limiter l'angle d'inclinaison.

**15.** Système de régulation pour un véhicule (1), permettant d'enregistrer des signaux de mesure (ω; $n_{FL}$, $n_{FR}$, $n_{RL}$, $n_{RR}$, q), d'exécuter une régulation du véhicule et de déterminer et utiliser un empattement (L) du véhicule (1) par un procédé selon l'une des revendications précédentes.

**16.** Système de régulation de véhicule selon la revendication 15, **caractérisé en ce qu'**il présente un dispositif de commande (2), un détecteur (3) de vitesse de lacet qui mesure la vitesse de lacet ($\omega$), de détecteurs (5.1, 5.2, 5.3, 5.4) de vitesse de rotation des roues qui mesurent la vitesse de rotation ($n_{FL}$, $n_{FR}$, $n_{RL}$, $n_{RR}$) des roues et d'un détecteur (4) d'accélération transversale qui mesure l'accélération transversale (q).

**17.** Système de régulation de véhicule selon les revendications 15 ou 16, **caractérisé en ce qu'**il est un système de régulation de la stabilité ou un système de régulation du freinage, par exemple ABS, ASR, ESP ou ESC.

**18.** Système de régulation de véhicule selon l'une des revendications 15 à 17, **caractérisé en ce que** l'empattement (L) déterminé est utilisé pour déterminer le taux de conversion de la direction, les références des roues individuelles de systèmes de régulation ou le comportement de lacet.

Fig. 1

Fig. 2

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19809546 C1
- DE 19706752 A1